# EUROPEAN PATENT SPECIFICATION

(11) **EP 3 044 932 B1**
(45) Date of publication and mention of the grant of the patent: **06.09.2017**
(21) Application number: 13766847.1
(22) Date of filing: 13.09.2013
(51) Int. Cl.: H04L 29/08

(54) **QUICK SERVICE PROVIDER CONTACT USING A GATEWAY**
SCHNELLER KONTAKT ZU EINEM DIENSTANBIETER MITTELS EINES GATEWAYS
CONTACT RAPIDE DE FOURNISSEUR DE SERVICES À L'AIDE D'UNE PASSERELLE

(43) Date of publication of application: 20.07.2016
(73) Proprietor: Thomson Licensing, 92130 Issy-les-Moulineaux (FR)
(72) Inventor: COOPER, Steven Lee, Indianapolis, Indiana 46075 (US)
(74) Representative: Huchet, Anne
(86) International application number: PCT/US2013/059616
(87) International publication number: WO 2015/038139

(56) References cited:
- US-A1- 2002 116 524
- US-A1- 2006 193 446
- US-A1- 2012 208 490

## Description

### BACKGROUND

Problems can exist with phone connections to an existing local customer service center, particularly in a voice over Internet Protocol (VOIP) setting. For instance, the local service provider's telephone number may not be readily known. A user would have to stop and lookup the number and then dial it manually. A similar problem can exist in a regular land line telephone system (plain old telephone system or POTS). These land line systems have solved the problem through using a standardized phone number. However, as the popularity of Internet communications increases, fewer land line operators will exist and, eventually, dialing "0" may at some point not get the user any assistance at all. Phone service through VOIP can be significantly more regionalized and localized, resulting in greater difficulty for the user in determining the correct contact number for one of these local service providers.

### SUMMARY

A convenient, abbreviated contact method (e.g., a one touch button (such as a "star" or speed dial button)) is provided for accessing a local service provider's customer assistance system using a VOIP system and available Internet connection. A contact number is embedded in a gateway that provides VOIP service for a user. The user is able to contact a service provider via a shortened or abbreviated dialing method without having actual knowledge of the embedded number. If the number changes or the gateway is moved to a new regional provider, the embedded number can be altered without requiring user knowledge or interactions.

The above presents a simplified summary of the subject matter in order to provide a basic understanding of some aspects of subject matter embodiments. This summary is not an extensive overview of the subject matter. It is not intended to identify key/critical elements of the embodiments or to delineate the scope of the subject matter. Its sole purpose is to present some concepts of the subject matter in a simplified form as a prelude to the more detailed description that is presented later.

To the accomplishment of the foregoing and related ends, certain illustrative aspects of embodiments are described herein in connection with the following description and the annexed drawings. These aspects are indicative, however, of but a few of the various ways in which the principles of the subject matter can be employed, and the subject matter is intended to include all such aspects and their equivalents. Other advantages and novel features of the subject matter can become apparent from the following detailed description when considered in conjunction with the drawings. Document US2006193446 represents relevant prior art.

### BRIEF DESCRIPTION OF THE DRAWINGS

FIG. 1 shows a typical diagram for an advanced gateway that includes a VOIP service.
FIG. 2 is an example of a system that provides a service connection for a VOIP device interfacing through a gateway.
FIG. 3 is a flow diagram of a method of providing a service connection for a VOIP device.

### DETAILED DESCRIPTION

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details. In other instances, well-known structures and devices are shown in block diagram form in order to facilitate describing the embodiments.

As the unified home communication systems become more prevalent, an advanced gateway device will be used to handle a diverse set of communications in the home. This can include wireless devices, cellular telephones, wired devices and telephone service over the Internet (VOIP services). The gateway is in the unique position of having knowledge of how the devices operate and interact with each other. Thus, the gateway becomes the keeper of the communication systems and is able to provide information to the devices to facilitate their operations.

When an advanced gateway device with VOIP service (e.g., either digital subscriber line - DSL Cable, or long term evolution - LTE) is used to provide telephone service, it typically requires a set-up procedure before being used. During this initial set-up, a device is typically connected to a service provider in order to install startup information. At this time, a local customer service number can be downloaded and stored in the gateway device. This number can then be assigned a specific abbreviated dialing method, such as, for example, a star and/or speed dial pattern (this can be pre-determined or user selectable). The customer service number can also be embedded in the software in the gateway device. It can also be reported or provided to the gateway via a configuration file (e.g., simple network management protocol - SNMP, technical report - TR-069, etc.) or can be acquired through a uniform resource locator - URL (e.g., the URL can include security to prevent unauthorized access, etc.).

The customer then uses this specific pattern and/or button, etc. on the handset to make a customer service call. The pattern is translated to the specific number using the information stored in the gateway device. One particular embodiment, the error light emitting diode - LED on the VOIP phone is used as a button to initiate the call. In this manner, the user does not even need to be aware of what number is called. This allows the service provide to change/update the service call number without needing to inform the users. A new number can be pushed to the gateway to replace the existing number. The user would still contact the service provider in the same fashion as before, eliminating a lot of frustration, especially when an old number is no longer in service. Likewise, if the user moves to a new location they can easily contact their new provider via the same methods as before (e.g., speed dial number, special designated button, error light, etc.) after their gateway is initialized. If a handset unit should become broken or otherwise undesired (e.g., color change, style change, etc.), it can be replaced without requiring any additional programming of the contact information by the user.

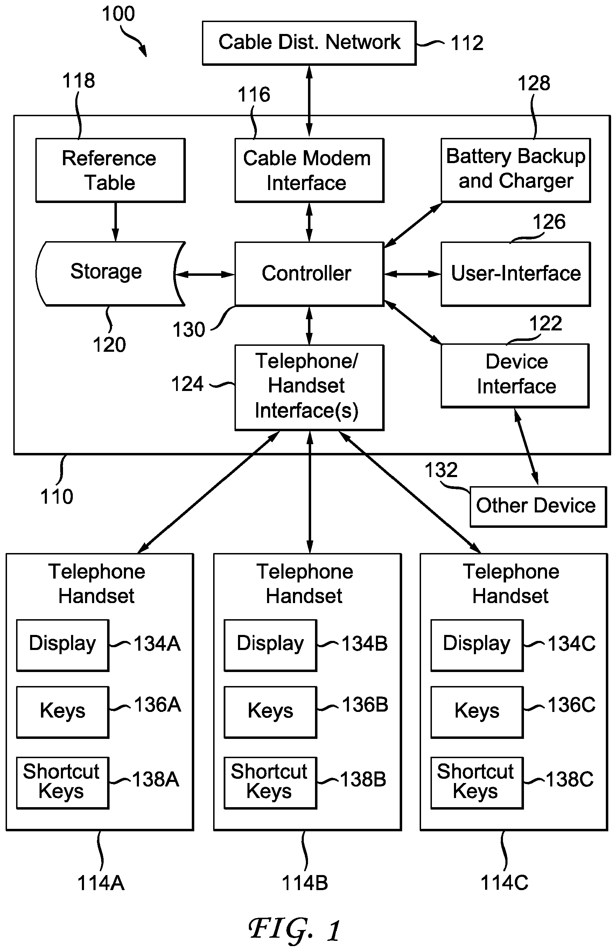

FIG. 1 shows an example 100 of an advanced gateway device 110 (for use in Cable, Wireless LTE, or DSL) that also includes a VOIP system. The advanced cable gateway device 110 interfaces, in this example, to a cable signal distribution network 112 outside a home, or user premises, and to devices, such as telephone handsets 114A-114C, present inside the home. The advanced cable gateway device 110 generally operates as a data cable modem as well as a voice over Internet protocol (VOIP) interface for home telephony.

The advanced cable gateway device in FIG. 1 includes a cable modem interface 116, a reference table 118, a storage device 120, an external device interface 122, a telephone/handset interface 124, a user interface 126, and battery backup and charger 128 - all interconnected with a central controller 130 as shown. The cable modem interface 116 operates to tune and demodulate a received signal from the cable distribution network or to modulate and transmit an outgoing signal to the cable distribution network. The cable modem interface 116 passes control information and data transport streams to and from the controller 130. The device interface 122 communicates data between the controller 130 and one or more external devices 132. External devices 132 can include, but are not limited to computers, tablets, video displays, and the like. Depending on design selections, some or all of the external devices 132 can be internal. The communications is typically data communications that include one or more of internet information, video, and/or audio. The communication with the external devices 132 can be done through a wired or wireless interface.

The user interface 126 can include a mouse, a button keypad, and/or a touch screen and may include video display technology. The user interface 126 provides user control of the device. The reference table 118 and storage element 120 provides local storage of data including video content (including program guide information), contact lists, device setting, and the like. The telephone/handset interface 124 provides telephony and control information between the controller 130 and one or more external telephone handsets 114A-114C. The communication is typically made over a twisted pair phone line. However, other protocols and media can be used, such as digital enhanced cordless telecommunications (DECT).

Each telephone handset 114A-114C includes traditional phone circuits as well as a display 134A-134C for the user, including phone numbers, dialing information and the like. The telephone handset also includes a keypad with keys 136A-136C, either as a set of buttons or a touch screen. The telephone handset can also include an additional set of buttons, used as shortcut keys 138A-138C. The keys and/or shortcut keys can be used to dial and/or speed dial to make a connection with, for example, a service provider representative as described above.

The controller 130 in the main device 110 in FIG. 1 provides a main interface, data protocol translation and decoding, and routing function for the various network interfaces connected to the device 110. The controller 130 also manages the storage and retrieval of data and/or control information to and from the reference table 118 and storage element 120. The controller 130 also provides user interface information and processes user inputs communicated through the user interface 122.

The advanced cable gateway device 110 in FIG. 1 also includes a backup battery and charging system 128 in communication with controller 130. The battery backup system in the device 110 is provided to maintain telephone operation in the event of a normal power interruption. As such, when a power interruption occurs, the device 110, through operations in the controller 130, can cease to operate except as needed to operate as a telephone interface 124 to the connected telephone handsets 114A-114C and to permit VOIP service through the cable network 112. The battery in the backup battery and charging system 128 can be any type of rechargeable battery, including, but not limited, to a nickel cadmium or nickel metal hydride type. The charger can be a standard battery charging circuit and can be controlled by the controller 130. In addition to all of the other functions in the device 110, the controller 130 maintains the battery condition based on a set of management principles.

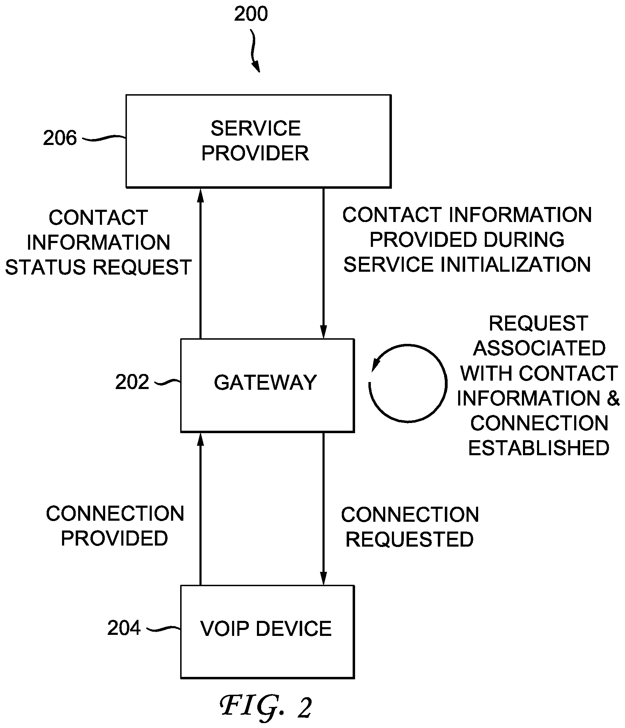

FIG. 2 is an example of a system 200 that provides a service connection for a VOIP device 204 interfacing through a gateway 202. The VOIP device 204 (i.e., a communication device) establishes a connection method with the gateway 202. This can be accomplished through the use of a VOIP device with a predetermined method such as, for example, a separate button marked for the connection and/or a speed dial sequence established with the gateway 202 and the like. The gateway 202 itself typically can be accessed via a webpage that controls its settings. A user can program the gateway 202 via the settings to accept an existing button on the VOIP device 204 as the connection method (e.g., reassign the button's functionality and/or add new functionality to a button). The setup could be made easier by having the gateway 202 provide a state (i.e., a connection method establishment state) that when initiated can accept the next button press and/or sequence of button presses on the VOIP device 204 as the desired contact method. In this scenario, the user does not need to understand fully how to set the controls. The connection method can also be established by the VOIP device 204. Either through a display and/or button press sequence, the VOIP device 204 can send a signal to the gateway 202 to inform/program it of/with the desired connection method. Once the connection method is established, a user can easily make the connection.

The gateway 202 can proactively request contact information from, for example, service provider 206 and/or can passively wait for the contact information to be received from the service provider 206. The receiving of the contact information can also be a combination of both. Once the contact information is obtained, the gateway 202 can periodically check on if the contact information is current or not. The gateway 202 can also determine if service has been changed and/or if the gateway 202 and/or VOIP device 204 has been relocated, requiring updated contact information. The service provider 206 can provide the contact information during service initialization.

Once the contact information is received, the gateway 202 can store the data in its storage and/or allow the information to remain embedded in data and/or software provided by the service provider 206. In the latter case, a pointer to the contact information can be stored in the gateway 202 database. The database can also contain a contact method that has been established. For example, the database can contain the dialing sequence of *987 which is associated to the contact information. The database can also contain a button press signal type that has been established as the contact method (e.g., "help" labeled button on the VOIP device 204, etc.). When the VOIP device 204 requests a connection, the gateway 202 retrieves the contact information and establishes a connection with, for example, service provider 206. The call placement is transparent to the user. One skilled in the art can appreciate that the provider of the contact information can be an entity other than that of the VOIP service provider. For example, it can also be contact information for the gateway provider and the like.

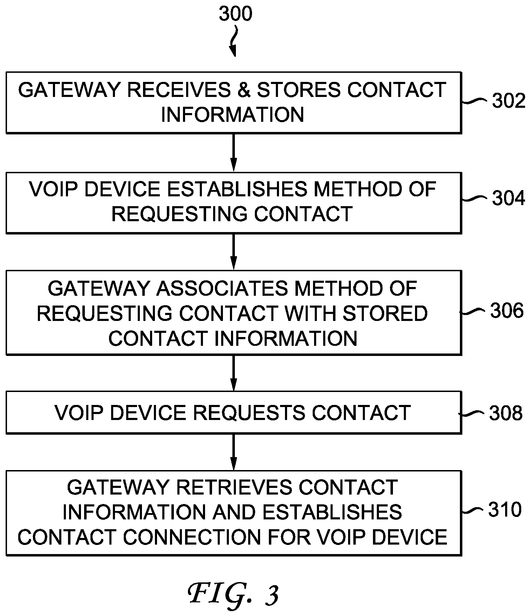

In view of the exemplary systems shown and described above, methodologies that can be implemented in accordance with the embodiments will be better appreciated with reference to the flow charts of FIG. 3. While, for purposes of simplicity of explanation, the methodologies are shown and described as a series of blocks, it is to be understood and appreciated that the embodiments are not limited by the order of the blocks, as some blocks can, in accordance with an embodiment, occur in different orders *and*/*or* concurrently with other blocks from that shown and described herein. Moreover, not all illustrated blocks may be required to implement the methodologies in accordance with the embodiments.

FIG. 3 is a flow diagram of a method 300 of providing a service connection for a VOIP device. The method starts with a gateway receiving contact information and storing the contact information 302. As mentioned previously, storing can include, but is not limited to, storing the actual contact information in a database and/or storing a pointer to the contact information that remains embedded in a service provider's data and/or software. A VOIP device and the gateway establish a method of requesting contact 304. This can be automated through a series of communications between the VOIP device and the gateway when service is initialized. It can also be accomplished with user interactions such as, for example, a button selection and/or series of button selections. It can also be established with user interaction in setting up the gateway and/or in setting up the VOIP device. The establishment of the contact method can be done before and/or after receiving the contact information.

The gateway then associates a method of requesting contact with the stored pointer and/or contact information 306. Thus, the contact information can be directly stored in the gateway's storage database and/or left embedded in data and/or software provided by a service provider with a pointer stored for information retrieval. The VOIP device can then request contact 308. This is accomplished through the previous methods of button presses, signals, etc as described above. When this occurs, the gateway retrieves the contact information and establishes a contact connection for the VOIP device 310. From a user's perspective, the contact connection operation is transparent, and the user merely presses a button, etc. and the connection is made. This method of establishing contact allows for changes/updates to be made to the contact information without requiring interaction by the user. In fact, typically, a user will not know the exact contact information nor if/when it changes. Thus, it provides a seamless operation with little user skill required, even in the situations where the gateway is moved and/or the service provider changes.

What has been described above includes examples of the embodiments. It is, of course, not possible to describe every conceivable combination of components or methodologies for purposes of describing the embodiments, but one of ordinary skill in the art can recognize that many further combinations and permutations of the embodiments are possible. Accordingly, the subject matter is intended to embrace all such alterations, modifications and variations that fall within the scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A system that establishes a connection for a communication device, comprising:
a gateway (110) that receives and stores data associated with contact information and contact information from a service provider and provides a communication connection between a communication device (134) and the service provider when a signal is received from the communication device;
wherein the signal received by the gateway from the communication device includes the data associated with the contact information and the gateway responds to the signal by accessing the contact information from a database within the gateway and establishes a connection between the communication device and the service provider, and
wherein the gateway requests updates from the service provider for the contact information.

2. The system of claim 1, wherein the gateway and the communication device automatically establish a connection method.

3. The system of claim 1 or claim 2, wherein the gateway receives contact information during initialization of the communication device.

4. The system of any of claim 2 or 3, wherein the connection method is established through a webpage for controlling the gateway.

5. The system of any of claim 2 or 3, wherein the connection method is established using the communication device.

6. The system of any of claim 2 or 3, wherein the connection method is established by user interactions.

7. A method for establishing a connection for a communication device, comprising the steps of:
receiving contact information from a service provider (302);
storing data associated with the contact information (302) and the contact information in a database of a gateway, the gateway having a communication device interface; and
establishing a connection (304) between the gateway and the communication device connected to the gateway for contacting the service provider;
retrieving the contact information from the database of the gateway using the data associated with the contact information (306) when the communication device requests contact with a service provider (308);
using the contact information to establish a connection between the communication device and the service provider (310), requesting updates for the contact information.

8. The method of claim 7 further comprising the step of:
storing a pointer to a location containing the contact information.

9. The method of any of claim 7 or 8, the step of establishing a connection method further comprising:
accessing a webpage associated with the gateway; and
setting the connection method for the gateway.

10. The method of any of claim 7 or 8, the step of establishing a connection method further comprising:
setting the gateway in a connection method establishment state; and
selecting the connection method on the communication device to set the gateway connection method.

11. The method of any of claim 7 or 8, the step of establishing a connection method further comprising:
automatically negotiating a connection method between the gateway and communication device during initialization of the communication device.

## Patentansprüche

1. System, das eine Verbindung für eine Kommunikationsvorrichtung aufbaut, wobei das System umfasst:
ein Gateway (110) das Daten, die Kontaktinformationen zugeordnet sind, und Kontaktinformationen von einem Dienstanbieter empfängt und speichert und eine Kommunikationsverbindung zwischen einer Kommunikationsvorrichtung (134) und dem Dienstanbieter bereitstellt, wenn von der Kommunikationsvorrichtung ein Signal empfangen wird;
wobei das durch das Gateway von der Kommunikationsvorrichtung empfangene Signal die Daten enthält, die den Kontaktinformationen zugeordnet sind, und wobei das Gateway dadurch auf das Signal antwortet, dass es auf die Kontaktinformationen von einer Datenbank innerhalb des Gateways zugreift und zwischen der Kommunikationsvorrichtung und dem Dienstanbieter eine Verbindung aufbaut, und wobei das Gateway von dem Dienstanbieter Aktualisierungen für die Kontaktinformationen anfordert.

2. System nach Anspruch 1, wobei das Gateway und die Kommunikationsvorrichtung automatisch ein Verbindungsverfahren festsetzen.

3. System nach Anspruch 1 oder Anspruch 2, wobei das Gateway während der Initialisierung der Kommunikationsvorrichtung Kontaktinformationen empfängt.

4. System nach einem der Ansprüche 2 oder 3, wobei das Verbindungsverfahren über eine Webseite zum Steuern des Gateways festgesetzt wird.

5. System nach einem der Ansprüche 2 oder 3, wobei das Verbindungsverfahren unter Verwendung der Kommunikationsvorrichtung festgesetzt wird.

6. System nach einem der Ansprüche 2 oder 3, wobei das Verbindungsverfahren durch Nutzerinteraktionen festgesetzt wird.

7. Verfahren zum Aufbauen einer Verbindung für eine Kommunikationsvorrichtung, wobei das Verfahren die folgenden Schritte umfasst:
Empfangen von Kontaktinformationen von einem Dienstanbieter (302);
Speichern von Daten, die den Kontaktinformationen (302) zugeordnet sind, und der Kontaktinformationen in einer Datenbank eines Gateways, wobei das Gateway eine Kommunikationsvorrichtungsschnittstelle aufweist; und
Aufbauen einer Verbindung (304) zwischen dem Gateway und der Kommunikationsvorrichtung, die mit dem Gateway verbunden ist, um mit dem Dienstanbieter Verbindung aufzunehmen;
Auslesen der Kontaktinformationen aus der Datenbank des Gateways unter Verwendung der den Kontaktinformationen (306) zugeordneten Daten, wenn die Kommunikationsvorrichtung einen Kontakt mit einem Dienstanbieter (308) anfordert;
Verwenden der Kontaktinformationen, um zwischen der Kommunikationsvorrichtung und dem Dienstanbieter (310) eine Verbindung aufzubauen, Aktualisierungen für die Kontaktinformationen anzufordern.

8. Verfahren nach Anspruch 7, das ferner den folgenden Schritt umfasst:
Speichern eines Zeigers auf einen Ort, der die Kontaktinformationen enthält.

9. Verfahren nach einem der Ansprüche 7 oder 8, wobei der Schritt des Festsetzens eines Verbindungsverfahrens ferner umfasst:
Zugreifen auf eine Webseite, die dem Gateway zugeordnet ist; und
Einstellen des Verbindungsverfahrens für das Gateway.

10. Verfahren nach einem der Ansprüche 7 oder 8, wobei der Schritt des Festsetzens eines Verbindungsverfahrens ferner umfasst:
Einstellen des Gateways in einen Verbindungsverfahren-Festsetzungszustand; und
Auswählen des Verbindungsverfahrens in der Kommunikationsvorrichtung, um das Gateway-Verbindungsverfahren einzustellen.

11. Verfahren nach einem der Ansprüche 7 oder 8, wobei der Schritt des Festsetzens eines Verbindungsverfahrens ferner umfasst:
automatisches Aushandeln eines Verbindungsverfahrens zwischen dem Gateway und der Kommunikationsvorrichtung während der Initialisierung der Kommunikationsvorrichtung.

## Revendications

1. Système qui établit une connexion pour un dispositif de communication, comprenant :
une passerelle (110) qui reçoit et stocke des données associées à des informations de contact et des informations de contact d'un fournisseur de services et fournit une connexion de communication entre un dispositif de communication (134) et le fournisseur de services lorsqu'un signal est reçu depuis le dispositif de communication ;
dans lequel le signal reçu par la passerelle depuis le dispositif de communication inclut les données associées aux informations de contact et la passerelle répond au signal en accédant aux informations de contact depuis une base de données dans la passerelle et établit une connexion entre le dispositif de communication et le fournisseur de services, et
dans lequel la passerelle demande des mises à jour du fournisseur de services concernant les informations de contact.

2. Système selon la revendication 1, dans lequel la passerelle et le dispositif de communication établissent automatiquement une méthode de connexion.

3. Système selon la revendication 1 ou 2, dans lequel la passerelle reçoit des informations de contact pendant l'initialisation du dispositif de communication.

4. Système selon l'une des revendications 2 ou 3, dans lequel la méthode de connexion est établie via une page Web pour contrôler la passerelle.

5. Système selon l'une des revendications 2 ou 3, dans lequel la méthode de connexion est établie à l'aide du dispositif de communication.

6. Système selon l'une des revendications 2 ou 3, dans lequel la méthode de connexion est établie par des interactions utilisateur.

7. Procédé d'établissement d'une connexion pour un dispositif de communication, comprenant les étapes suivantes :
réception d'informations de contact d'un fournisseur de services (302) ;
stockage des données associées aux informations de contact (302) et des informations de contact dans une base de données d'une passerelle, la passerelle ayant une interface de dispositif de communication ; et
établissement d'une connexion (304) entre la passerelle et le dispositif de communication connecté à la passerelle pour contacter le fournisseur de services ;
récupération des informations de contact depuis la base de données de la passerelle à l'aide des données associées aux informations de contact (306) lorsque le dispositif de communication demande un contact avec un fournisseur de services (308) ;
utilisation des informations de contact pour établir une connexion entre le dispositif de communication et le fournisseur de services (310) ;
demande de mises à jour concernant les informations de contact.

8. Procédé selon la revendication 7, comprenant en outre l'étape suivante :
stockage d'un pointeur vers un emplacement contenant les informations de contact.

9. Procédé selon l'une des revendications 7 ou 8, l'étape d'établissement d'une méthode de connexion comprenant en outre :
l'accès à une page Web associée à la passerelle ; et
la définition de la méthode de connexion pour la passerelle.

10. Procédé selon l'une des revendications 7 ou 8, l'étape d'établissement d'une méthode de connexion comprenant en outre :
le passage de la passerelle à un état d'établissement de méthode de connexion ; et
la sélection de la méthode de connexion sur le dispositif de communication pour définir la méthode de connexion de la passerelle.

11. Procédé selon l'une des revendications 7 ou 8, l'étape d'établissement d'une méthode de connexion comprenant en outre :
la négociation automatique d'une méthode de connexion entre la passerelle et le dispositif de communication pendant l'initialisation du dispositif de communication.
